# EUROPEAN PATENT APPLICATION

(11) **EP 2 239 382 A2**
(43) Date of publication of application: **13.10.2010**
(21) Application number: 10168575.8
(22) Date of filing: 04.02.2004
(51) Int. Cl.: E04B 1/04, E04B 5/04

(54) **High-performance concrete, reinforcement bar, concrete element, wall element and construction**

(30) Priority: 04.02.2003 SE 0300312; 06.02.2003 SE 0300350; 26.06.2003 SE 0301928
(62) Divisional of application: 04708099.9
(71) Applicant: Ericsson, Roger, 172 62 Sundbyberg (SE)
(72) Inventor: Ericsson, Roger, 172 62 Sundbyberg (SE); Olson, Anders, 413 18 Göteborg (SE)
(74) Representative: Norberg, Charlotte

(57) **Abstract**

The present invention relates to high-performance concrete comprising a ballast material, which comprises an open pore structure material for receiving during heating water vapour; a reinforcement bar (20), which reinforcement bar comprises a first tensile force portion (22) and a second tensile force portion (24), connected to the first tensile force portion (20) by means of an intermediate portion (26); and a concrete element (40) reinforced with the above-mentioned reinforcement bar. The invention further relates to a wall element (50) comprising a wall member (52) and a column (51) of high-performance concrete, wherein said concrete column (51) and said concrete wall member (52) form an integrated unit; and a construction (170) comprising at least one floor element (172), which floor element (172) is supported on least one wall element (160), said floor element (172) and said wall element (160) forming at least one casting mould for a beam (181).

## Description

### TECHNICAL FIELD

The present invention relates to high-performance concrete according to independent claim 1, a reinforcement bar according to independent claim 3, a concrete element according to independent claim 6, a wall element according to independent claim 9 and a construction according to independent claim 12.

### BACKGROUND ART

The building industry has not developed at the same rate as many other industries, which above all manifests itself in a less than optimal use of new and old building materials and complex, and thus unnecessarily expensive, constructional solutions.

Concrete, as an example, is one of the most frequently used building materials, and has so been for at least a century. However, the composition of concrete and the casting process has not changed much during this period of time, and even though some progress has been made, its most fundamental characteristics, weight and volume, remains basically the same. These characteristics cause logistics problems, which prevent effective process- and prefabrication solutions.

The most significant line of development focuses on high-performance concrete. Any concrete, which satisfies certain criteria, proposed to overcome limitations of conventional concrete may be called high-performance concrete, and thus there is no unique definition of high-performance concrete. However, a water-cement ratio equal to or lower than 0.39, when all capillary pores in the cement paste are vanished, constitutes a significant dividing line. High-performance concrete usually comprises a cement paste mixed with fines such as micro silica and plasticizing admixtures, which increase the density and adhesiveness of the cement paste, and is characterised by high strength, waterproofness but diffusion-openness, high durability, and good carbonation and chloride resistance. Due to its improved mechanical properties, high-performance concrete is often called "high-strength concrete".

However, due to the absence of constructional solutions benefiting from the superior properties of high-performance concrete, ordinary concrete is still more commonly used. Furthermore, the fire properties of high-performance concrete are deterrent, due to the extensive splitting that occurs when water in the cement paste is vaporised and expands during heating and the explosive nature of said splitting.

Attempts have been made to overcome the latter problem by adding strong, artificial fibres, which during heating are supposed to melt away, leaving open expansion spaces for the expanding vaporised water. However, the test results are contradictory. One possible explanation is that the artificial fibres do not melt away completely, but leave some space blocking residues. Accordingly, high-performance concrete should not be used without proper, and expensive, fire protection, or in areas where good fire properties are important, which further reduces the usefulness of high-performance concrete.

Outer- and inner walls may be constructed in many different ways. Where the building frame is made of concrete, the inner walls are usually also made of concrete, cast in situ as a part of the load carrying structure, while the outer walls are of less mechanical importance and may be constructed in any suitable material, e.g. wood. In case of a steel frame, usually strengthened by beams, diagonal braces and local reinforcements, e.g. concrete elements at corners, staircases etc., neither the inner nor the outer walls have a load carrying function and may be constructed in any suitable material. Accordingly, prefabricated concrete walls, in particular outer concrete walls, are unusual and the excellent mechanical properties of high-performance concrete are thus not fully utilised.

Another reason why solutions involving prefabricated concrete wall elements are unusual is as mentioned above the high density of concrete. Besides the logistics problems it causes, the weight of the elements also gives rise to large forces and displacements, necessitating large tolerances and large joints. These joints are difficult to seal, and damp damages and high energy losses are common in constructions utilising prefabricated concrete elements, leading to high costs of maintenance.

EP 0765422 presents a constructional solution, were use is made of prefabricated concrete wall members, which interact with floor elements supported thereon to define spaces for concrete beams to be cast in situ. In a similar manner, beam spaces are defined by said walls and other beams. Similar ideas are presented in US 4,098,042 and US 4,338,759.

The solutions presented above suffer from a plurality of drawbacks. First, the casting processes are complicated and difficult to carry through. This is either due to the casting moulds being slim and narrow and filled with reinforcement bars, making it difficult to fill out the entire mould, or due to the a pressure in case of larger casting moulds, which may cause leakage of concrete and mould stability problems. The shape of the deep casting moulds also makes it difficult to supervise the casting of the columns. Second, the load carrying capacity of the prefabricated walls is not fully utilised and the columns are slim, which effects the total load carrying capacity negatively. Third, some casting still takes place in situ.

Another problem related to anything but optimal use of building materials, concerns reinforcement bars. Reinforcement bars have a tensile strength that is superior in comparison to concrete, and are used to absorb tensile forces. However, most constructional solutions, in which reinforcement bars are used, shows an excessive amount of reinforcement bars. This is of course not a favourable arrangement from an economical point of view.

### PURPOSE OF THE INVENTION

A first purpose of the invention is to provide high-performance concrete with excellent fire properties.

A second purpose of the invention is to eliminate the use of superfluous reinforcement material.

A third purpose of the invention is to provide a wall element of high-performance concrete, which is light with excellent mechanical properties.

A fourth purpose of the invention is to provide a constructional solution, utilising the superior mechanical properties of the above-mentioned prefabricated wall element.

### SUMMARY OF THE INVENTION

The first purpose of the invention is obtained with high-performance concrete according to claim 1, comprising a ballast material, which comprises an open pore structure material for receiving during heating water vapour from water in the concrete. Preferably, the ballast material is a non-combustible material.

The open pore structure provides plenty of room for the vaporised water during the expansion phase, and thus the high-performance concrete according to the present invention overcomes the above-mentioned problem of concrete splitting.

The second purpose of the invention is obtained with a reinforcement bar comprising a first tensile force portion for absorbing tensile forces and a second tensile force portion, connected to the first tensile force portion by means of an intermediate portion, forming an angle with the first and the second tensile force portions, respectively.

A reinforcement bar as described above makes a conventional reinforcement skeleton more or less obsolete, since the intermediate portion interconnects the tensile force portions of the reinforcement bar, which may be optimally located in respect of tensile force distribution.

Advantageously, the intermediate portion is a shear force portion for absorbing shear forces, which reduces the shear forces carried by the reinforced material.

Advantageously, the reinforcement bar comprises two parallel reinforcement bar pieces, each comprising a first and a second tensile force portion connected by means of an intermediate portion, and which reinforcement bar pieces are joined at at least one end thereof. Such a reinforcement bar is easy to mount since it involves few separate parts to be interconnected.

The second purpose of the invention is also obtained with a concrete element adapted to span at least two supports, which concrete element is reinforced with at least one reinforcement bar, which comprises a first tensile force portion for absorbing tensile forces and a second tensile force portion, connected to the first tensile force portion by means of an intermediate portion, forming an angle with the first and the second tensile force portions respectively. The advantages with such a solution are the same as those mentioned above.

Advantageously, the first tensile portion is arranged to absorb tensile forces in the lower part of the concrete element and the second tensile portion arranged to absorb tensile forces in the upper part of the concrete element. With this arrangement, no superfluous reinforcement is located in places where there are no tensile forces.

Preferably, the concrete is a high-performance concrete, which allows for a smaller reinforcement cover and smaller beam dimensions, and thus a lighter structure, lower tensile forces and less reinforcement material.

The third purpose of the invention is obtained with a wall element comprising a concrete wall member and a concrete column, wherein said concrete column and said concrete wall member form an integrated unit of high-performance concrete.

As mentioned above, the use of high-performance concrete with excellent mechanical properties instead of ordinary concrete makes a reduction of the wall member dimensions possible, resulting in a lighter, less bulky and thus cheaper structure. Further, there are no problems associated with joints between the wall members and the columns, as they are integrally cast, i.e. either simultaneously cast or cast at different locations, forming an integrated, load interacting unit. The low weight of the wall element makes it suitable for prefabrication, which facilitates the mounting and production thereof.

The wall element may at the top be provided with a vertically protruding flange, extending in the longitudinal direction of the wall element, and present at the top thereof a support surface, forming an angle with said flange. This flange may be used to form a concrete mould for a beam to be cast on top of the wall element, and may also consist of an isolating material, to prevent fires from spreading and to eliminate thermal bridges

Advantageously, the concrete of the wall element is a high-performance concrete according to claim 1 or 2, which is fireproof.

The fourth purpose of the invention is obtained with a construction comprising at least one floor element, which is supported on least one wall element according to any of claims 9-11, said floor element and said wall element forming at least a part of a casting mould for a beam.

Such a construction utilises the advantages of the wall element, forming a light but solid structure. The construction presents no or few joints, e.g. between the columns and the wall members, and does therefore not suffer from the above mentioned problems of high energy losses and damp damages associated with prefabricated elements of ordinary concrete. In case the wall element is prefabricated, concrete leakage, mould stability problems and poorly cast columns, all associated with columns cast in situ, are also avoided.

Finally, said beam may advantageously be reinforced with a reinforcement bar according to any of claims 3-5, which is optimised for absorbing tensile forces.

### SHORT DESCRIPTION OF THE DRAWINGS

The present invention will now be further elucidated with references to the drawings, on which:
Fig. 1 is a perspective view of a reinforcement skeleton according to prior art;
Fig. 2 is a side view of a reinforcement bar according to a first preferred embodiment of a reinforcement bar according to the present invention;
Fig. 3 is a perspective view of a reinforcement bar according to a second preferred embodiment of a reinforcement bar according to the present invention;
Fig. 4 is a perspective view of a beam reinforced with three reinforcement bars according to Fig. 3;
Fig. 5 is a cross section through a wall element according to a first preferred embodiment of a wall element according to the present invention;
Fig. 6 is a cross section of the wall element of Fig. 5 provided with isolation;
Fig. 7 is a cross section of the wall element of Fig. 5 provided with isolation;
Fig. 8 is a cross section through a wall element according to a second preferred embodiment of a wall element according to the present invention;
Fig. 9 is a cross section through a wall element according to a third preferred embodiment of the present invention;
Fig. 10-12 show horizontal and vertical cross sections through the wall element according to Fig. 6 with an extra layer of isolation;
Fig. 13-15 show a wall element according to a fourth preferred embodiment of a wall element according to the present invention;
Fig. 16 shows the interconnection between two wall elements according to Fig. 13-15;
Fig. 17 is a perspective view of a wall element according to a fifth preferred embodiment of a wall element according to the present invention;
Fig. 18 and 19 are perspective views of a construction according to the present invention;
Fig. 20 is a perspective view of a multi-storey construction according to the present invention;
Fig. 21 is a cross section through the outer wall;
Fig. 22 shows a first interconnection between a beam and a wall element;
Fig. 23 shows a second interconnection between a beam and a wall element;
Fig. 24 a cross section through a floor element covered by a flat board;
Fig. 25 and 26 show a beam cast on an inner wall element;
Fig. 27 and 28 show to different ways of reinforcing a column;
Fig. 29 shows a column with a channel for transportation of cooling liquids; and
Fig. 30-32 show different ways of isolating the construction.

### DESCRIPTION OF PREFERRED EMBODIMENTS

Concrete is a mix of various components, including cement, mixing water, ballast materials and admixtures in suitable proportions. Cement paste forms from the hydration reaction of cement with mixing water, and acts as an adhesive, which holds the various components together. By adding fines, e.g. micro silica, and plasticizing mixtures to the cement paste, high-performance concrete is produced, with high density and a lower water-cement ratio.

When a concrete element is exposed to intensive heating, e.g. during a fire, some of the water bound in the cement paste is vaporised and expands. To avoid splitting of the high-performance concrete due to an increased internal pressure, a ballast material according to the present invention includes an open pore structure material with high strength, which provides enough space for the expanding, vaporised water. Accordingly, the internal pressure is kept at a low level and the concrete remains substantially intact. Obviously, it is of great importance that other ballast materials, cement, micro silica or other fine particles do not fill or block the pores of the open pore structure material during the casting process. Therefore, the pores of the open pore structure material should have dimensions such that they allow water molecules, which do not constitute a problem during the casting process since high-performance concrete is highly water absorbing, but not molecules of these other substances to penetrate. Preferably, the open pore structure material is a non-combustible material with such mechanical properties that the overall strength of the concrete is not reduced. These requirements are met by, for instance, particles in waste materials from metal production (slag), which in many in a preferred embodiment of high-performance concrete according to the present invention comprise a porous composite alloy, and exclude e.g. leca, which is weaker than granite and quartz and presents pore dimensions such, that the pores are filled with fine particles during casting.

Thus, according to the present invention, it is possible to use high-performance concrete with superior mechanical properties for the casting of concrete elements in areas where good fire properties are essential, and without the need for expensive fire protection. Consequently, the dimensions of these concrete elements may be reduced, leading to lower costs of material and less bulky constructions.

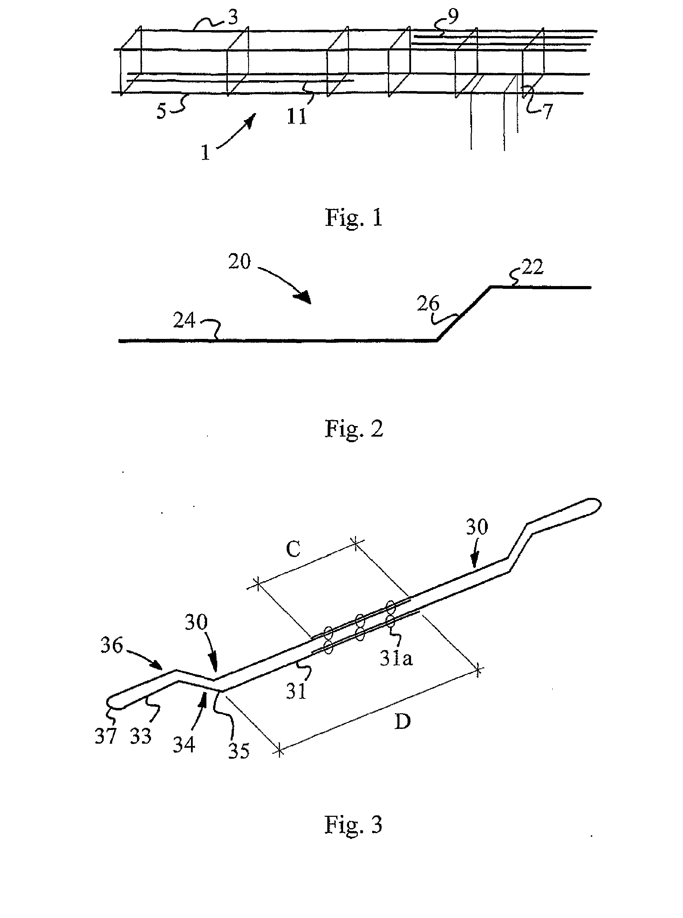

Fig. 1 shows a reinforcement skeleton 1 for a concrete element (not shown) according to the state of the art, comprising overhead reinforcement bars 3, underlying reinforcement bars 5, rectilinear reinforcement bars 7 and additional upper and lower reinforcement bars 9, 11. The additional upper and lower reinforcement bars 9, 11 are located so as to absorb tensile forces in an upper and a lower part of the concrete element, while the main function of the remaining reinforcement bars 3, 5, 7 is to provide a supportive framework during curing for said load carrying additional upper and lower reinforcement bars 9, 11.

Fig. 2 is a side view of a reinforcement bar 20 according to a first preferred embodiment of the present invention. The reinforcement bar comprises a first tensile force portion 22 for absorbing tensile forces, a second tensile force portion 24, also for absorbing tensile forces, and an intermediate portion 26, interconnecting said first and second tensile force portions 22, 24, which intermediate portion 26 forms an angle with the first and the second tensile force portions 22, 24, respectively. This arrangement makes the overhead reinforcement bars 3 (see Fig. 1) and at least parts of the rectilinear reinforcement bars 7 obsolete, since the intermediate portion serve the purpose of supporting the first tensile force portion 22 during casting.

Fig. 3 shows two reinforcement bars 30 each comprising two reinforcement bar pieces 34 and 36. Each reinforcement bar piece 34, 36 comprises a first and a second tensile force portion, 33 and 31, interconnected by an intermediate portion 35, in this case a shear force portion 35 for absorbing shear forces. A curved portion 37, which may be fixed to a frame (not shown), connects said reinforcement bars pieces 34, 36 at ends thereof. In this specific case, the curved portion 37 is curved 180 degrees, but the curvature may take any value. The reinforcement bars 30 are interconnected along a connection length C, e.g. by means of reinforcement wires 31 c, which connection length C may be lengthened or shortened to adjust the overall length of the connected reinforcement bars 30 to certain constructional conditions. The reinforcement bars may also be of different standardised lengths. For example, assuming that the concrete element is a beam supported on two supports with a span-width of 4-6 meters, the second tensile force portion 31 would preferably have a length D of about 2,5-3,5 meters, while the connection length C would be about 1,0 meters.

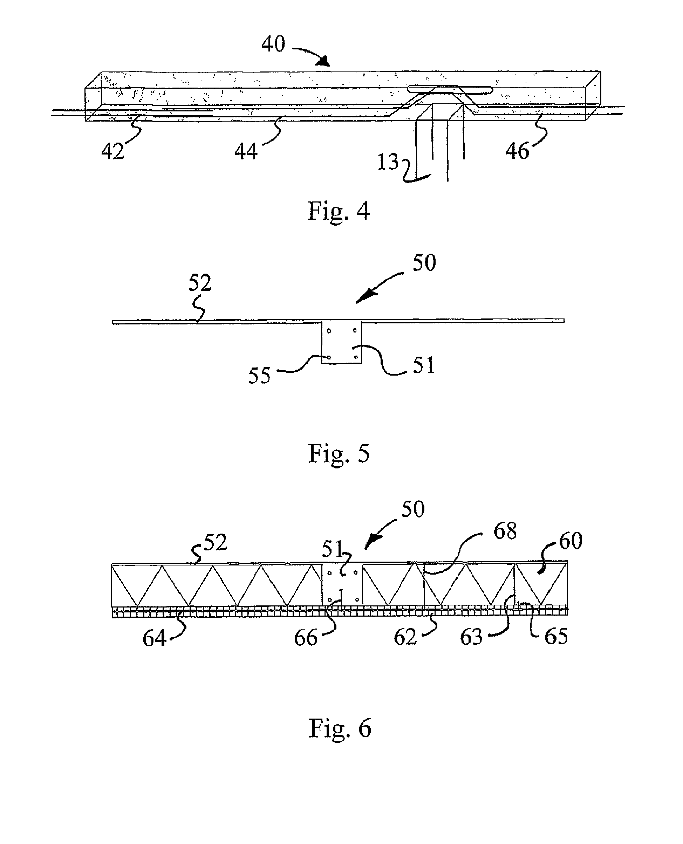

Fig. 4 shows a portion of such a concrete beam 40, reinforced with three interconnected reinforcement bars 42, 44, 46, similar to those described above. The outer reinforcement bars 42, 46 may in turn be connected to additional reinforcement bars (not shown) or fastened to a rigid structure (not shown). Evidently, the reinforcement bars 42, 44, 46 are optimised for absorbing the tensile forces in the beam 40, which occur in the upper part of the beam 40 above the support 13 and up to some distance from the supports and in a mid-region between said supports in the lower part of the beam 40. Accordingly, no superfluous reinforcement bars are being used.

A beam such as the one shown in Fig. 4 may be cast using ordinary concrete, but high-performance concrete, such as the one described above, is preferable, due to its superior structural strength and superior adhesiveness, which enhances the interaction between the concrete and the reinforcement bars. Accordingly, the number of reinforcement bars or the dimensions thereof may be further reduced.

It should be noted, that if the beam in Fig. 4 is cast using ordinary concrete, it may in some cases be necessary to reinforce, e.g. by reinforcement bars, the part of the beam where shear forces occur to prevent cracking of the concrete.

It is obvious to a man skilled in the art that the scope of the invention is not limited to the embodiments shown in Fig. 1-4. For example, a reinforcement bar may comprise any number of tensile force portions, connected by intermediate portions.

Now turning to Fig. 5 is shown a first preferred embodiment of a wall element 50 made of high-performance concrete, comprising a column 51 for carrying vertical loads and a stabilising wall member 52, which column 51 and wall member 52 are integrally cast forming a load interacting unit. Using high-performance concrete instead of ordinary concrete allows for a reduction of the thickness of the wall member 52, partly due to the fact that high-performance concrete has a higher structural strength and partly due to the high-performance concrete being impermeable to liquid water and CO₂-resistive, which allows for a thinner cover of reinforcement, where reinforcements are necessary. The column 51 forms a load interacting unit with the wall member 52 and is preferably reinforced with reinforcement bars 55 and/or fibres. Advantageously, the dimensions of the column 51 are such, that it may be accommodated within a wall thickness of 200-300 mm.

Fig. 6 shows the wall element 50 in Fig. 5, on one side covered with a layer of isolation 60 (that may have formed at least a part of a casting mould for the column 51). Outside the layer of isolation 60 is arranged a surface layer 62, e.g. a finishing, reinforced with a net 64 or suchlike and anchored in said column 51 or wall member 52 by means of fasteners 66, 68, e.g. a screw means with a plate. The wall element may also be provided with profiles 63 to further enhance the stability of the wall during production and mounting thereof, preferably steel profiles made of thin sheet, and fasteners 65 are used to attach the net 64 to said profiles 63. In this embodiment, the surface layer 62 consists of an isolating material, such as cellular plastic or mineral wool, but alternative constructional solutions involving mounting of wood, glass, bricks, stones etc. are possible.

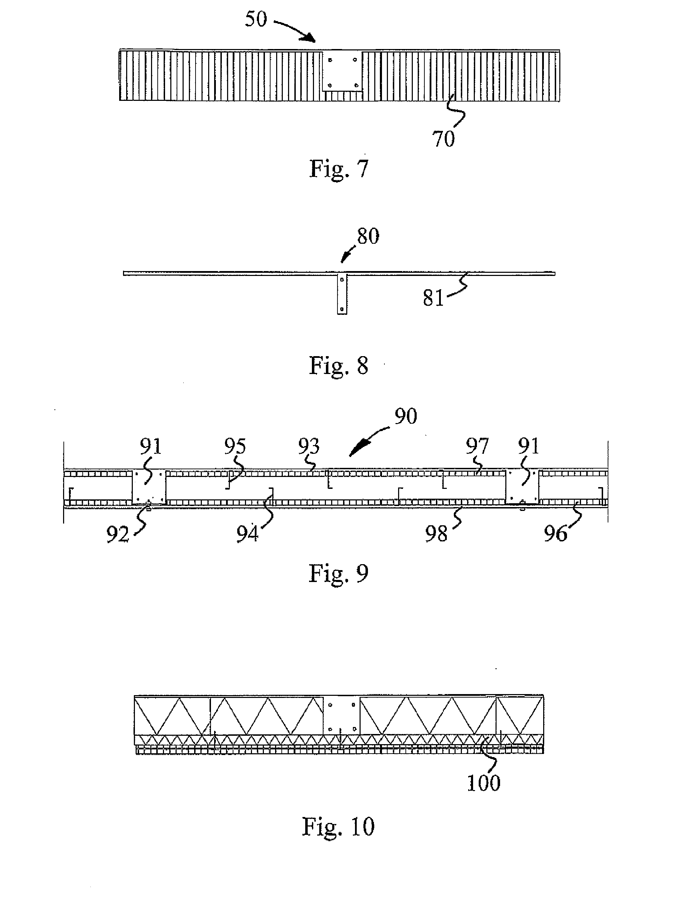

In fig. 7, the wall element 50 is covered with one single layer of isolation 70, such as cellular plastic.

Fig. 8 shows a second preferred embodiment of a wall element 80 with a slender column 81, a lighter design suitable when the vertical loads are small in comparison to the horizontal loads.

Fig. 9 shows a third preferred embodiment of a wall element 90 according to the present invention, comprising two columns 91 and a wall member 93, forming a load interacting unit. This wall element may advantageously be used in a wall separating two apartments. The wall member 93 is preferably stabilised by profiles 95 and covered with isolation 97, e.g. mineral wool. An additional wall member 98, e.g. formed by concrete or gypsum, located opposite said wall element 90 and provided with stabilising profiles 94 and an isolation layer 96, is by means of fasteners 92 attached to the columns 91 on the opposite side relatively the wall element wall member 93. When the wall is mounted and the additional wall member 98 cast integral with the wall element 90 at the top and bottoms thereof, the fasteners 92 may be removed, which effectively reduces the overall sound conductivity of the wall. In case the wall element 90 is prefabricated, the additional wall member 98 may also be prefabricated and fastened to said column prior to mounting of the wall element 90. However, it may also be mounted after mounting of the wall element 90, e.g. to facilitate installation of electrical equipment.

Fig. 10-12 shows cross sections through the wall element according to Fig. 6 with an extra layer of isolation 100.

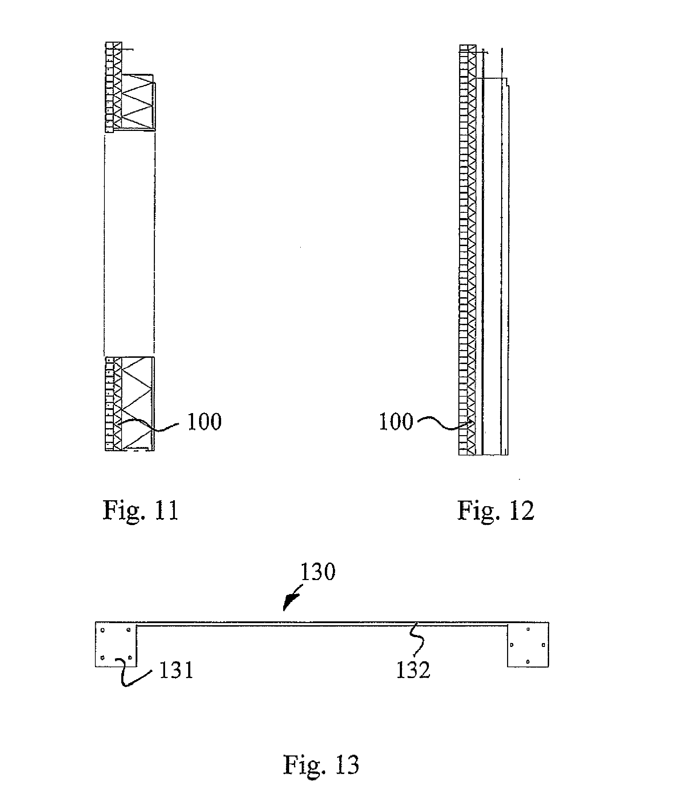

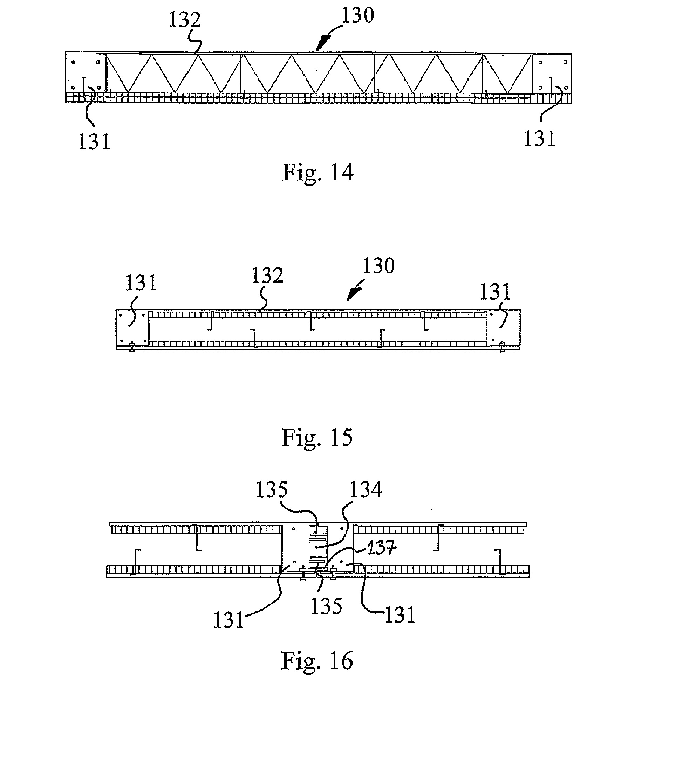

Fig. 13-15 shows a fourth preferred embodiment of a wall element 130 according to the present invention, comprising two columns 131 and one wall member 132, and Fig. 16 shows the interconnection between two such wall elements 130. An intermediate space 134 is defined between the two adjacent columns 131, and in this case also between the wall member 132 and an opposite piece of isolation 137, which intermediate space 134 is to be filled by a curable material, e.g. concrete. Reinforcement bars 135 may protrude from the columns 131 into the intermediate space 134, so that the cured material and the two columns 131 form a load interacting unit. One advantage with this arrangement is that the two columns 131 may be rather thin, which makes the wall elements lighter.

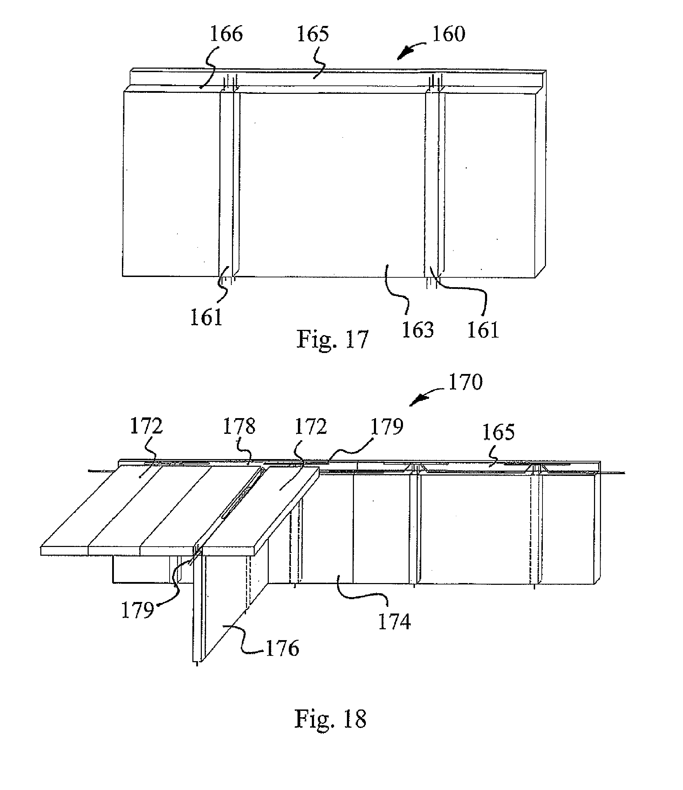

In Fig. 17 is shown a fifth preferred embodiment of a wall element 160, similar to the ones described above but with columns 161 accommodated in a wall member 163, which is provided with a vertically protruding flange 165, for example formed by steel or concrete, for steel supported isolation, which extends in the longitudinal direction of the wall element 160. The flange 165 may also consist of a fireproof material (e.g. steel supported isolation), to prevent spreading of fires and eliminate thermal bridges. The wall element 160 also presents a support surface 166 perpendicular to said flange 165, the function of which will be explained in detail with references to Fig. 18-24.

It is obvious to a man skilled in the art that the wall elements described above may be used as both inner and outer wall elements and may comprise any number of columns and wall members. The fact that the wall elements are light makes them well suited for prefabrication, wholly or partially, but they may of course also be cast in situ.

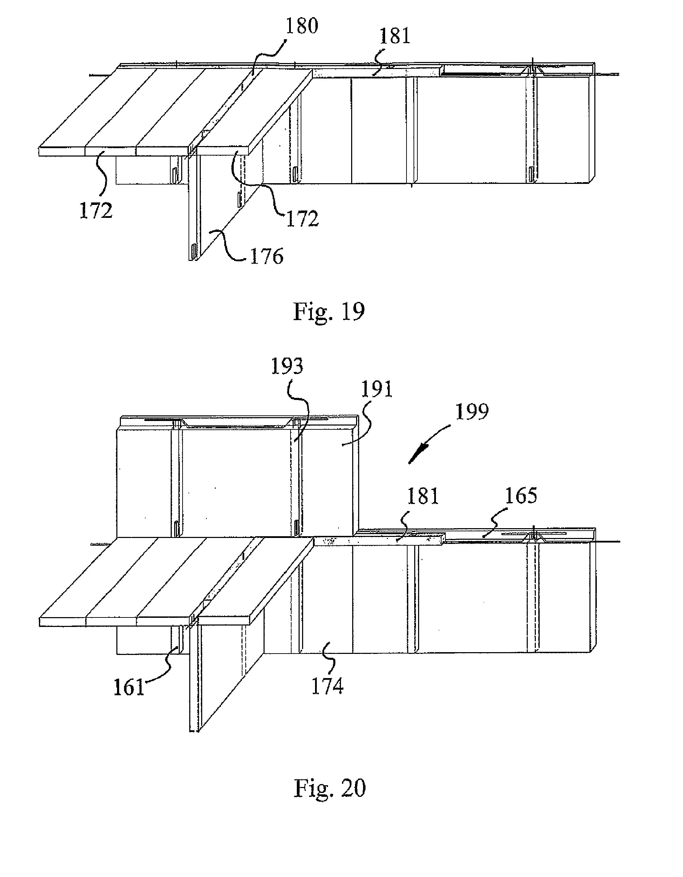

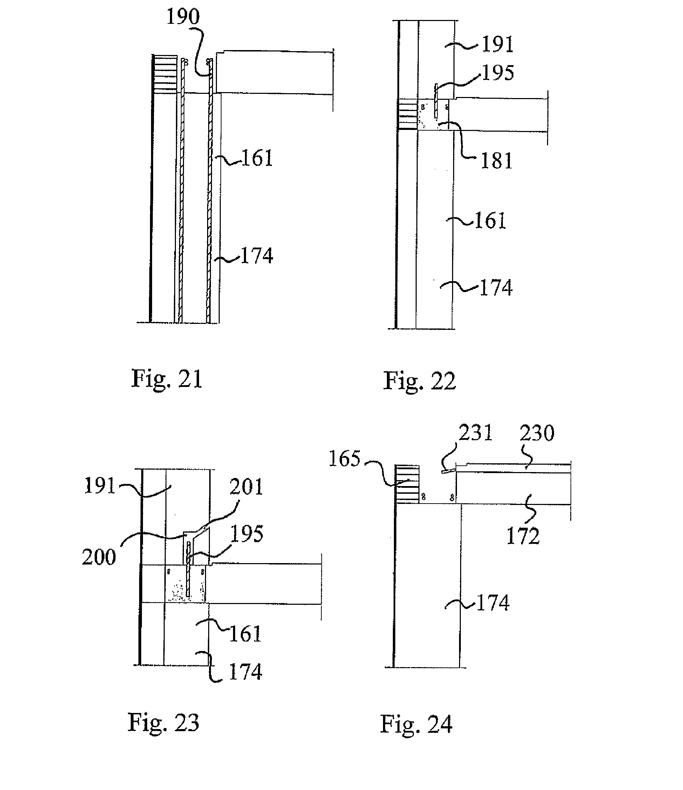

Fig. 18 shows a construction 170 forming part of a half-completed building, comprising any number of floor elements 172 (here two), preferably concrete floor elements, supported on top of at least one outer wall element 174 according to Fig. 17 and at least one inner wall element 176. The inner wall element 176 is similar to the outer wall element 174 according to Fig. 15, but without a vertically protruding flange 165. The inner wall element 176 forms an angle, in this case 90 degrees, with the outer wall element 174 and the floor elements 172 interact with the inner and outer wall elements 176, 174 to form at least a part of a casting moulds for beams 178 thereon. The casting moulds 178 are filled with reinforcement bars 179 according to Fig. 3 (though ordinary reinforcement skeletons such as the one shown in Fig. 1 may be used as well) and reinforcement bars 190 extend into said moulds 178 from the columns 131 (see Fig. 21). The casting moulds 178 are subsequently filled with a material 180 suitable for casting (see Fig. 19), e.g. concrete, and the beams 181 cast therein and the wall and floor elements 172, 174, 176 form a load interacting unit, in which the columns carry most of the vertical loads, and the beams, floor elements and wall members have a stabilising function.

Fig. 20 shows a multi-storey construction 199, with an upper outer wall element 191 located on top of one of the above-mentioned outer wall elements 174, below referred to as the lower outer wall element. The upper outer wall element 191 is supporting on the flange 165 of said lower outer wall element 174 and the beam 181 cast thereon. The columns 193 of the upper outer wall element 191 are fixed to the lower outer wall element 174 and/or the beam 181 by means of mounting members 195, embedded in or mechanically attached to the upper outer wall element 191 and the lower outer wall element 174 and/or the beam 181. The columns 161 of the lower outer wall element 174 and the columns 193 of the upper outer wall element 191 are either eccentrically located, or, as in Fig. 20, one on top of the other.

Of course, additional wall elements may be added to the constructions 170, 199 of Fig. 18 and 20, forming large interacting units comprising any number of storeys.

Fig. 22 and 23 shows two alternative methods of mounting the upper outer wall element 191 onto the beam 181 cast on the lower outer wall element. In Fig. 21, the mounting members 195, embedded in the upper outer wall element 191, are introduced into the casting space above the lower outer wall element 174 before the concrete therein had cured, while in Fig. 23, the mounting members 195, embedded in the beam 181, was introduced into a cavity 200 in the upper outer wall element 191 at the mounting thereof. The cavity 200 was subsequently filled with concrete or another curable material through a small channel 201.

In Fig. 24 the floor element 172 is substantially covered by a flat board 230 with protruding fastening means 231 extending into the casting mould formed above the lower wall element 174, which flat board 230 is intended to form a load interacting unit with the above-mentioned beam 181.

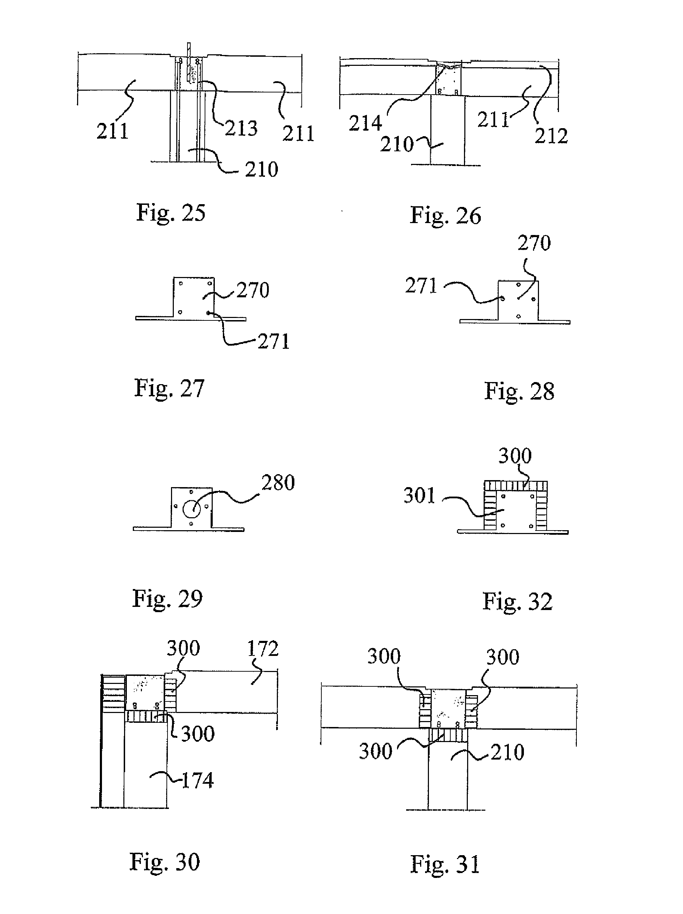

Fig. 25 and 26 are similar to Fig. 21, 22 and 24 and shows a beam cast on an inner wall element 210 between to floor elements 211, with and without flat boards 212, and reinforcement bars 213, 214 used to form a load interacting unit.

Fig. 27 and 28 shows to different ways of reinforcing a column 270, where the reinforcement bars 271 are either traditionally arranged or rotated around a central axis of the column 270, in this case about 45 degrees. The latter arrangement facilitates the casting process, since the problem with narrow spaces in the casting mould is eliminated, and further increases the fireproofness of the column, since only one reinforcement bar is located in the vicinity of the exposed wall member.

The fireproofness of the column is further increased with an arrangement according to Fig. 29, wherein the column presents a longitudinal channel 280 for transportation of cooling fluids. Fig. 30-31 shows alternative, or complementary, ways of protecting the above-mentioned construction from fires, by covering ends of the floor elements 172 as well as the inner and outer wall elements 210, 174 with fireproof isolation 300. Finally, in Fig. 32, is shown a similar arrangement for a column 301.

According to an aspect the present invention discloses high-performance concrete comprising a ballast material, wherein said ballast material comprises an open pore structure material for receiving during heating water vapour from water in the concrete.

According to an aspect of said high-performance concrete, said ballast material is a non-combustible material.

According to an aspect the present invention discloses a reinforcement bar (20), for example for a concrete structure, which reinforcement bar comprises a first tensile force portion (22) for absorbing tensile forces, wherein the reinforcement bar (20) also comprises a second tensile force portion (24), connected to the first tensile force portion (20) by means of an intermediate portion (26), forming an angle with the first and the second tensile force portions (22, 24) respectively.

According to an aspect of said reinforcement bar (20) the intermediate portion (26) is a shear force portion for absorbing shear forces.

According to an aspect of the reinforcement bar (30) comprises two parallel reinforcement bar pieces (34, 36), each comprising a first and a second tensile force portion (33, 31) connected by means of an intermediate portion (35), and which reinforcement bar pieces (34, 36) are joined at at least one end thereof.

According to an aspect the present invention discloses a concrete element (40) adapted to span at least two supports (13), wherein the concrete element (40) is reinforced with at least one reinforcement bar (42, 44, 46), which comprises a first tensile force portion for absorbing tensile forces and a second tensile force portion, connected to the first tensile force portion by means of an intermediate portion, forming an angle with the first and the second tensile force portions respectively.

According to an aspect of the concrete element (40) the first tensile portion is arranged to absorb tensile forces in the lower part of the concrete element (40), and that the second tensile portion is arranged to absorb tensile forces in the upper part of the concrete element (40).

According to an aspect of the concrete element (40) the concrete is a high-performance concrete.

Although this invention has been shown and described with respect to detailed embodiments thereof, it will be understood by those skilled in the art that various changes in form and detail thereof may be made without departing from the scope of the claims.

## Claims

1. Wall element (50) comprising a concrete wall member (52), **characterised in that** said wall element (50) further comprises a concrete column (51), wherein said concrete column (51) and said concrete wall member (52) form an integrated unit of high-performance concrete.

2. Wall element (160) according to claim 1, **characterised in that** said wall element (160) at the top is provided with a vertically protruding flange (165), extending in the longitudinal direction of the wall element (160), and that the wall element (160) presents at the top a support surface (166), forming an angle with said flange (165).

3. Wall element (160) according to claim 1 or 2, **characterised in that** the concrete is a high-performance concrete comprising a ballast material, said ballast material comprising an open pore structure material for receiving during heating water vapour from water in the concrete.

4. Wall element (160) according to claim 3, **characterised in that** said ballast material is a non-combustible material.

5. Construction (170) comprising at least one floor element (172), **characterised in that** said floor element (172) is supported on least one wall element (160) according to any of claims 1-4, said floor element (172) and said wall element (160) forming at least a part of a casting mould for a beam (181).

6. Construction (170) according to claim 5, **characterised in that** said beam (181) is reinforced with a reinforcement bar (20, 30) comprising a first tensile force portion (22) for absorbing tensile forces, wherein the reinforcement bar (20) also comprises a second tensile force portion (24), connected to the first tensile force portion (22) by means of an intermediate portion (26), forming an angle with the first and the second tensile force portions (22, 24) respectively.

7. Construction (170) according to claim 6, **characterised in that** the intermediate portion (26) is a shear force portion for absorbing shear forces.

8. Construction (170) according to claim 6 or 7, **characterised in that** the reinforcement bar (30) comprises two parallel reinforcement bar pieces (34, 36), each comprising a first and a second tensile force portion (33, 31) connected by means of an intermediate portion (35), and which reinforcement bar pieces (34, 36) are joined at at least one end thereof
